# EUROPÄISCHE PATENTSCHRIFT

(11) **EP 0 684 103 B1**
(45) Veröffentlichungstag und Bekanntmachung des Hinweises auf die Patenterteilung: **18.02.1998**
(21) Anmeldenummer: 95107449.1
(22) Anmeldetag: 17.05.1995
(51) Int. Cl.: B23K 20/227

(54) **Verfahren zum Verbinden von Bauteilen**
Method for assembling workpieces
Méthode d'assemblage d'éléments

(30) Priorität: 26.05.1994 DE 4418268
(43) Veröffentlichungstag der Anmeldung: 29.11.1995
(73) Patentinhaber: SCHUNK SINTERMETALLTECHNIK GMBH, D-35452 Heuchelheim (DE)
(72) Erfinder: Cohrt, Henri, Dr., D-35444 Biebertal (DE)
(74) Vertreter: Sternagel, Hans-Günther, Dr.

(56) Entgegenhaltungen:
- EP-A- 0 250 322
- DE-A- 2 805 233
- DE-A- 3 313 736
- GB-A- 2 075 554

## Beschreibung

Die vorliegende Erfindung bezieht sich auf ein neues Verfahren, das ein Verbinden oder Zusammenfügen eines pulvermetallurgischen Formteils mit einem weiteren Formteil ermöglicht. Dieses weitere Formteil ist schmelzmetallurgisch hergestellt.

Zum Verbinden von Sintermetallteilen untereinander oder mit aus anderen metallurgischen Werkstoffen bestehenden Teilen können bekannte Lötverfahren benutzt werden. Häufig weisen Sintermetallteile jedoch eine poröse Oberfläche auf, in deren Öffnungen das Hartlot eindringt und somit an der Oberfläche nicht mehr für eine Verbindung zur Verfügung steht. Zur Vermeidung dieses Effekts existieren eine Anzahl von Spezialloten, die eine ausreichend starke Befestigung der Werkstoffteile aneinander ermöglichen. Entsprechende Lote erfordern jedoch ein sehr sorgfältiges Arbeiten beim Verarbeitungsprozeß und weisen selbst einen relativ hohen Preis auf, so daß die Fertigungskosten hoch anzusetzen sind.

Eine Alternative zum Lötprozeß stellt das sogenannte Diffusionsfügen dar. Dabei werden zwei pulvermetallurgische Formteile aufeinandergefügt und durch anschließendes Sintern die Teile fest miteinander verbunden. Durch den Sinterprozeß diffundieren Bestandteile der beiden Werkstücke ineinander, wodurch die feste Verbindung entsteht. Eine solche Fügung ist bis jetzt mit befriedigendem Resultat jedoch nur mit 2 pulvermetallurgisch hergestellten Formteilen möglich, wobei beide Bestandteile noch eine möglichst ähnliche Zusammensetzung aufweisen sollen.

Das Verbinden eines pulvermetallurgischen Formteils mit anderen, nicht pulvermetallurgisch hergestellten metallischen Formteilen ist bis jetzt nicht zufriedenstellend möglich.

Eine Übersicht über den aktuellen Stand bei der Technik des Diffusionsfügens findet sich in "Wirtschaftliche PM-Formteile durch Fügen" von H.P. Koch, D. Pohl in: H. Kolaska (Hrsg.): "Innovative und wirtschaftliche Formteile durch Pulvermetallurgie", Zusammenfassung des Symposiums vom 25./26.11.1993 in Hagen, in der Reihe "Pulvermetallurgie in Wissenschaft und Praxis", Bd.9, VDI Verlag Düsseldorf, S.36-75.

Die Diffusionsfügung zwischen einer schmelzmetallurgisch hergestellten Welle und einer zu befestigenden pulvermetallurgischen Nocke wird in US-P-4,236,923 beschrieben. Die Verbindung erfolgt dabei durch Flüssigphasensintern in reduzierender Atmosphäre, vorzugsweise wird das pulvermetallurgische Werkstück einem Vorsintern unterworfen. Das Verfahren ist hinsichtlich der pulvermetallurgischen Komponente auf spezielle, hoch legierte Werkstoffe beschränkt, die beim Sintern eine Flüssigphase ausbilden (Flüssigphasensintern).

Aus DE-A-31 17 282 ist ein Verfahren zum Herstellen von zwei oder mehreren, miteinander verbundenen pulvermetallurgisch hergestellten Gegenständen bekannt. Der erste Gegenstand enthält eine ausreichende Menge Kupfer, so daß er sich bei der Sinterung ausdehnt. Der zweite Gegenstand hat eine solche Gestalt, daß sie eine festsitzende Anlage an zumindest einem Abschnitt des ersten Pulvermetallteils ermöglicht. Durch einen ausreichenden Nickelgehalt schrumpft das zweite Teil beim Sintern. Zunächst werden sogenannte Grünkörper der gewünschten Form erzeugt und in Kontakt miteinander gebracht und dann gemeinsam bei erhöhter Temperatur gesintert. Diese Druckschrift enthält keinen Hinweis auf die Verbindung eines pulvermetallisch hergestellten Teils mit schmelzmetallurgisch hergestellten Teilen.

Es ist die Aufgabe der vorliegenden Erfindung, ein Verfahren bereitzustellen, das die Verbindung von pulvermetallurgisch hergestellten Formteilen mit anderen schmelzmetallurgisch hergestellen Formteilen unter Vermeidung der oben beschriebenen Nachteile und Beschränkungen gestattet.

Diese Aufgabe wird gelöst durch ein Verfahren zum dauerhaften, festen Verbinden eines ersten, pulvermetallurgisch hergestellten Formteils mit einem oder mehreren weiteren, schmelzmetallurgisch hergestellten Formteilen, bei dem die Formteile zusammengefügt und auf erhöhte Temperaturen erhitzt werden, wobei man zumindest das erste Formteil als Grünkörper einsetzt, zu dessen Herstellung als pulvermetallurgische Komponente unlegiertes Eisen oder ein niedrig legierter Pulvermetallwerkstoff verwendet wurde, und die Formteile auf eine Temperatur zwischen etwa 1000° C und einer solchen Temperatur erhitzt werden, bei der in dem ersten Formteil noch kein Sintern mit ständiger Flüssigphase auftritt.

In den Unteransprüchen sind bevorzugte Ausführungsformen der vorliegenden Erfindung dargelegt.

Innerhalb der unten definierten Grenzen lassen sich praktisch alle Pulvermetallzusammensetzungen benutzen. Pulvermetallwerkstoffe können während des Sintervorgangs dimensionsstabil sein, sie zeigen meistens jedoch eine negative Volumenänderung (Schrumpfen). Auch Pulvermetallwerkstoffe, die eine positive Volumenänderung (Ausdehnung) zeigen, sind bekannt. Die Ausdehnung ist häufig nur temporär und tritt nur bei kürzeren Sinterzeiten ein.

Da die Festigkeit der beim Sinterprozeß entstehenden Verbindungen primär durch die Diffusion der Pulverbestandteile bestimmt wird, sind prinzipiell alle der oben klassifizierten Pulverarten einsetzbar. Es muß jedoch darauf geachtet werden, daß beim Zusammenfügen der Teile durch Sintern auch ein enger mechanischer Kontakt, wie etwa ein Preßsitz, gewährleistet ist. Diese Anforderung beschränkt gegebenenfalls die Pulverzusammensetzung auf solche, die während des Sinterns eine Schrumpfung zeigen. Dies ist etwa der Fall beim Verbinden eines pulvermetallurgisch hergestellten Zahnrads mit einer Metallwelle, wobei durch den Schrumpfungsprozeß des Zahnrads die feste Verbindung der Teile gewährleistet wird.

Im Gegensatz zu bisher bekannten Verfahren nach dem Stand der Technik ist es möglich, Werkstoffe einzusetzen, die beim Sintern keine Flüssigphase ausbilden. Die Verbindung der Formteile miteinander geschieht primär durch Diffusionsprozesse der Komponenten, wodurch sich eine stoffschlüssige Verbindung hoher Festigkeit ausbildet.

Ebenfalls als pulvermetallurgische Komponente eingesetzt werden können Pulvermetallwerkstoffe, die beim Sintern eine sogenannte temporäre flüssige Phase ergeben. Hierbei verschwindet eine zwischenzeitlich auftretende flüssige Phase während der Sinterzeit, wobei die Flüssigphasenbildner durch Diffusionsprozesse in die Matrix abwandern, d.h. von den Pulverkörnchen aufgesogen werden, und die Schmelze innerhalb der Sinterzeit wieder erstarrt. Die Verbindung der Formteile untereinander erfolgt primär durch Diffusionsprozesse und nicht durch in der Flüssigphase austretende Bestandteile des Pulvers.

Ein Vorteil des Verfahrens nach der vorliegenden Erfindung ist, daß keine speziellen, eine Flüssigphase während des Sinterns ausbildenden Pulver benutzt werden müssen bzw. es nicht notwendig und sogar unerwünscht ist, den Prozeß so zu führen, daß eine permanente Flüssigphase ausgebildet wird. Zum Einsatz gelangen die üblichen hochfesten, niedriglegierten Pulvermetallwerkstoffe. Solche Werkstoffe enthalten neben Eisen als Hauptbestandteil Legierungszusätze in einem Anteil bis 6 Gew.-%, in einzelnen Fällen auch bis etwa 8 Gew.-%. Diese Angaben verstehen sich einschließlich Kohlenstoff als Legierungszusatz. Die verwendeten Legierungszusätze enthalten im allgemeinen C, Cu, Ni, Mo, Cr, P, Co, W, Mn, Si, wobei diese Bestandteile allein oder in Kombination miteinander in dem Pulver vorliegen können. Bevorzugte Legierungen sind etwa Fe-C-Legierungen, Fe-P-C-Legierungen oder Fe-Cu-Ni-Mo-C-Legierungen. Auch unlegiertes Eisen eignet sich als Pulverwerkstoff.

Besonders geeignet sind pulvermetallurgische Komponenten, die als Bestandteile folgende Mengen der unten aufgeführten Elemente aufweisen: Fe 100-95 Gew.-%, Cu 0-3 Gew.-%, Ni 0-5 Gew.-%, Mo 0-2 Gew.-%, C 0-0,8 Gew.-%.

Da durch die Wahl eines geeigneten Werkstoffs bzw. geeigneter Reaktionsbedingungen die Ausbildung einer Flüssigphase vermieden wird, ist die Reproduzierbarkeit der Geometrie der erhaltenen Formteile größer und deren Toleranzbandbreite enger. Dies ist einsichtig, da bei Vermeidung eines Flüssigphasensinterns die Formteile ihre Geometrie beibehalten und sich lediglich das Volumen gegebenenfalls ändert.

Zur Herstellung der niedrig legierten Pulvermetallwerkstoffe wird im allgemeinen die Methode der Mischungslegierung benutzt werden, es ist beispielsweise aber auch der Einsatz diffusionsanlegierter oder durchlegierter Pulver möglich.

Um eine ausreichende Vorfestigkeit und genügende Schrumpfung der Grünkörper zu erreichen, sollen diese vorteilhafterweise mit einem Druck von 40-100 kN/m² verpreßt werden. Die so erhaltenen Grünkörper weisen dann eine Dichte zwischen 6,5 g/cm³ und 7,6 g/cm³, vorzugsweise 6,8 g/cm³-7,2 g/cm³ auf. Verwendet werden dabei die oben definierten pulvermetallurgischen Komponenten mit der üblichen mittleren Teilchengröße zwischen 1 µm und 400 µm, vorzugsweise 50 µm - 150 µm.

Für das weitere Formteil, das mit dem pulvermetallurgischen Formteil verbunden werden soll, eignet sich besonders gut ein schmelzmetallurgisch hergestelltes Formteil, das aus einer Eisenbasislegierung bestehen kann.

Das erste, pulvermetallurgisch hergestellte Formteil wird als Grünkörper, also in nicht gesinterter Form, mit dem weiteren Formteil zusammengefügt. Beide Bestandteile können dabei etwa durch Preßsitz oder einen engen Schiebesitz miteinander verbunden sein. Um eine lagerichtige Positionierung zu erreichen, können aber auch beispielsweise Anschlagbünde, Abflachungen oder Schlüsselweiten angebracht werden. Eine solche Konstruktion weist den zusätzlichen Vorteil auf, daß nach dem Zusammenfügen und anschließenden Sintern die Kraftübertragung unterstützt werden kann.

Es ist besonders bevorzugt, eine oder mehrere der Komponenten mit einer zusätzlichen Beschichtung im Bereich der Fügezone(n) zu versehen. Solche Beschichtungen bestehen etwa aus C, B, Cu oder Ni bzw. aus Basislegierungen dieser Elemente. Die Dicke dieser Beschichtungen beträgt ≤2,0 µm, vorzugsweise 0,5 µm. Die in der Beschichtung enthaltenen Elemente diffundieren während des Sinterprozesses in die zusammenzufügenden Komponenten ein, wobei aber im Bereich der Fügezone die Beschichtungselemente in erhöhter Konzentration verbleiben und eine Verfestigung bewirken.

Das Anbringen der zusätzlichen Beschichtung auf den Formteilen erfolgt vorzugsweise galvanisch. Möglich ist aber auch selbstverständlich das Aufbringen mittels der Vielzahl der inzwischen bekannten Methoden zum Abscheiden von Metallen oder Legierungen, wie etwa CVD, PVD, Plasmabeschichten, Laserbeschichten oder Abscheiden aus der reinen Gasphase.

Die Verbindung der Formteile miteinander geschieht durch Sintern. Um eine ausreichende Diffusion der Pulverbestandteile zu erreichen, ist es wichtig, die Formteile auf eine ausreichend hohe Temperatur zu erhitzen. Diese richtet sich nach dem eingesetzten Werkstoff und liegt oberhalb von 1000° C, vorzugsweise wird der Prozeß oberhalb von 1200°C durchgeführt. Wie bereits erwähnt, ist es dabei wichtig, die Temperatur so zu wählen, daß kein Flüssigphasensintern auftritt.

Im allgemeinen wird man nicht bei einer höheren Temperatur als 1300° C sintern. Ab dieser Temperatur beobachtet man bei vielen der nach der vorliegenden Erfindung geeigneten Pulvermetallwerkstoffe Flüssigphasensintern.

Der Sinterprozeß wird über einen Zeitraum von 1-24 Stunden, vorzugsweise 1,5-3 Stunden durchgeführt.

Der Sintervorgang kann kontinuierlich oder chargenweise durchgeführt werden, wobei zum Schutz vor Oxydation eine Schutzgasatmosphäre, wie etwa Stickstoff oder Argon benutzt oder auch Vakuum angelegt wird. Möglich ist auch, eine reduzierende Atmosphäre, wie Wasserstoffgas, zu benutzen.

Die Sintervorgänge können etwa in kontinuierlich arbeitenden Band-Sinteröfen, Hubbalkenöfen oder Durchstoßöfen durchgeführt werden. Auch können chargenweise arbeitende Vakuum-/Schutzgas- und Drucksinteröfen benutzt werden.

Das Verfahren nach der vorliegenden Erfindung gestattet die Herstellung komplexer Verbundstrukturen, die mit den bisher bekannten Methoden nicht oder nur unter großem Arbeits- und Kostenaufwand zu realisieren waren. Vorteile des Verfahrens liegen in der einfachen Verfahrenstechnik, den sehr hohen erreichbaren Festigkeiten, der durch enge Fügesitze gewährleisteten guten Zentrierung und der Einsparung von Verfahrensschritten.

Das beschriebene Verfahren eignet sich besonders, um Paßteile, wie etwa Zahnräder oder Nocken, auf einer Welle anzubringen. Dazu wird ein mit einer Bohrung versehenes, als Grünkörper vorliegendes Formteil, wie etwa ein Zahnrad, mit der Bohrung auf eine Welle gesetzt, wobei der Sitz zwischen den beiden Formteilen wie oben beschrieben ausgebildet ist. Anschließend wird das Werkstück im Ofen gesintert, wobei das pulvermetallurgische Formteil schrumpft, und man erhält ein Formteil hoher Festigkeit, bei dem das aufgesetzte Formteil widerstandsfähig auch gegen hohe Torsionsmomente und Ausdrückkräfte ist.

Die Erfindung wird nun anhand von Beispielen verdeutlicht.

### Beispiel 1:

Eine Welle aus Einsatzstahl C 15 des Durchmessers 8 mm wird in ein pulvermetallurgisch hergestelltes Zahnrad mit einer zentralen Bohrung gleichen Nennmaßes und folgenden Kenndaten eingesetzt:
verwendetes Metallpulver Fe 1,75 Cu 4 Ni 0,5 Mo 0,6 C, Dichte gepreßt 7,1 g/cm³, Höhe 8 mm.

Das so erhaltene Formteil wird bei 1220° C im Hubbalkenofen über 2 Stunden gesintert. Nach der Sinterung betrug die axiale Ausdrückkraft 25 kN.

### Beispiel 2

Eine Welle aus Einsatzstahl 16MnCr5 des Durchmessers 10 mm wird in ein pulvermetallurgisch hergestelltes Zahnrad mit einer zentralen Bohrung gleichen Nennmaßes und folgenden Kenndaten eingesetzt:
verwendetes Metallpulver Fe 4 Ni 0,75 Mo 0,6 C, Dichte gepreßt 7,1 g/cm³, Höhe 6 mm.

Das so erhaltene Formteil wird bei 1220° C im Hubbalkenofen über 2 Stunden gesintert. Nach der Sinterung betrug die Torsionsfestigkeit der Fügeverbindung 285 Nm.

### Beispiel 3

Eine Welle aus Wälzlagerstahl 100Cr6 des Durchmessers 10 mm wird in ein pulvermetallurgisch hergestelltes Zahnrad mit einer zentralen Bohrung gleichen Nennmaßes und folgenden Kenndaten eingesetzt:
verwendetes Metallpulver Fe 4 Ni 0,75 Mo 0,6 C, Dichte gepreßt 7,1 g/cm³, Höhe 6 mm.

Das so erhaltene Formteil wird bei 1220° C im Hubbalkenofen über 2 Stunden gesintert. Nach der Sinterung betrug die Torsionsfestigkeit der Fügeverbindung 335 Nm.

### Beispiel 4

Eine Welle aus Einsatzstahl C 15 des Durchmessers 8 mm, beschichtet mit Ni, Schichtdicke 0,5 µm wird in ein pulvermetallurgisch hergestelltes Zahnrad mit einer zentralen Bohrung gleichen Nennmaßes und folgenden Kenndaten eingesetzt:
verwendetes Metallpulver Fe 4 Ni 0,75 Mo 0,6 C, Dichte gepreßt 7,1 g/cm³, Höhe 8 mm.

Das so erhaltene Formteil wird bei 1220° C im Hubbalkenofen über 2 Stunden gesintert. Nach der Sinterung betrug die axiale Ausdrückkraft 25 kN.

## Patentansprüche

1. Verfahren zum dauerhaften, festen Verbinden eines ersten, pulvermetallurgisch hergestellten Formteils mit einem oder mehreren weiteren, schmelzmetallurgisch hergestellten Formteilen, bei dem die Formteile zusammengefügt und auf erhöhte Temperaturen erhitzt werden, wobei man zumindest das erste Formteil als Grünkörper einsetzt, zu dessen Herstellung als pulvermetallurgische Komponente unlegiertes Eisen oder ein niedrig legierter Pulvermetallwerkstoff verwendet wurde, und die Formteile auf eine Temperatur zwischen etwa 1000° C und einer solchen Temperatur erhitzt werden, bei der in dem ersten Formteil noch kein Sintern mit ständiger Flüssigphase auftritt.

2. Verfahren nach Anspruch 1,
**dadurch gekennzeichnet**,
daß als pulvermetallurgische Komponente ein Werkstoff verwendet wird, der beim Sintern eine Volumenkontraktion erfährt.

3. Verfahren nach Anspruch 1 oder 2,
**dadurch gekennzeichnet**,
daß als niedrig legierter Pulvermetallwerkstoff Eisen mit mindestens einem weiteren Zusatz von C, Cu, Ni, Mo, Cr, P, Co, W, Mn, Si in Mengen bis zu 8 Gew.-% benutzt wird.

4. Verfahren nach Anspruch 3,
**dadurch gekennzeichnet**,
daß der Zusatz oder die Zusätze in einer Menge bis zu 6 Gew.-% vorhanden sind.

5. Verfahren nach einem der Ansprüche 1-4,
**dadurch gekennzeichnet**,
daß das Sintern bei Temperaturen oberhalb von 1200° C durchgeführt wird.

6. Verfahren nach einem der Ansprüche 1-5,
**dadurch gekennzeichnet**,
daß zur Verfestigung im Bereich der Fügezone eine zusätzliche Beschichtung auf mindestens einer der Komponenten angebracht ist.

7. Verfahren nach Anspruch 6,
**dadurch gekennzeichnet**,
daß die Beschichtung C, B, Cu oder Ni enthält.

8. Verfahren nach Anspruch 6 oder 7,
**dadurch gekennzeichnet**,
daß die Beschichtung in einer Dicke von ≤2,0 µm angebracht ist.

9. Verfahren nach einem der Ansprüche 1-8,
**dadurch gekennzeichnet**,
daß auf mindestens einem Formteil an der Fügestelle Anschlagbünde, Abflachungen oder Schlüsselweiten angebracht sind.

10. Verfahren nach einem der Ansprüche 1-9,
**dadurch gekennzeichnet**,
daß das Sintern unter Schutzgas oder Vakuum durchgeführt wird.

11. Verfahren nach einem der Ansprüche 1-10,
**dadurch gekennzeichnet**,
daß ein pulvermetallurgisches Formteil, wie ein Zahnrad oder eine Nocke, auf einer Welle angebracht wird.

## Claims

1. Process for the durable fixed interconnection of a first preform, produced by powder metallurgy, with one or more further preforms, produced by smelting metallurgy, in which process the preforms are joined together and heated to increased temperatures and at least the first preform is used as the foundation body, for the production of which unalloyed iron or a low-alloyed powder metallurgical material was used, the preforms being heated to a temperature between about 1000°C, and a temperature at which, in the first preform, no sintering with a stable liquid phase yet occurs.

2. Process according to Claim 1, characterised by the fact that the powder metallurgical component used is a material which, on sintering, undergoes a volumetric contraction.

3. Process according to Claim 1 or 2, characterised by the fact that the low-alloy powder metallurgical material used is iron with at least a further addition of ***C*****, *Cu*, *Ni*, *Mo*, *Cr*, *P*, *Co*, *W*, *Mn***, ***Si*** in quantities of up to 8% by weight.

4. Process according to Claim 3, characterised by the fact that the addition or additions are present in a quantity of up to 6% by weight.

5. Process according to any one of Claims 1 to 4, characterised by the fact that the sintering is carried out at temperatures above 1200°C.

6. Process according to any one of Claims 1 to 5, characterised by the fact that, for purposes of hardening in the region of the joining zone, an additional coating is applied to at least one of the components.

7. Process according to Claim 6, characterised by the fact that the coating contains ***C*****, *B*, *Cu*** or ***Ni***.

8. Process according to Claim 6 or 7, characterised by the fact that the coating is applied in a thickness of ≤ 2.0 µm.

9. Process according to any one of Claims 1 to 8, characterised by the fact that projecting ties, bevels or wide interlocks are provided at the join of at least one preform.

10. Process according to one of Claims 1 to 9, characterised by the fact that the sintering is effected in protective gas or in a vacuum.

11. Process according to one of Claims 1 to 10, characterised by the fact that a powder-metallurgical preform, such as a gear wheel or cam, is mounted on a shaft.

## Revendications

1. Méthode d'assemblage permanent et fixe d'un premier élément moulé fabriqué sur la base de la métallurgie des poudres avec un ou plusieurs autres éléments moulés fabriqués sur la base de la métallurgie de fusion, dans laquelle les éléments moulés sont assemblés et chauffés à des températures élevées, au moins le premier élément moulé étant utilisé comme corps de base, pour sa fabrication en tant que composant métallocéramique, un fer sans alliage ou une matière métallocéramique à faible alliage étant utilisé et les éléments moulés étant chauffés à une température située entre 1000°C environ et une température à laquelle dans le premier élément moulé, il ne survient pas encore de frittage avec une phase liquide permanente.

2. Méthode selon la revendication 1, caractérisée en ce que, en tant que composant basé sur la métallurgie des poudres, on utilise une matière qui subit une contraction de volume lors du frittage.

3. Méthode selon la revendication 1 ou la revendication 2, caractérisée en ce que, en tant que matière métallocéramique à faible alliage, on utilise un fer comportant au moins un autre additif de C, Cu, Ni, Mo, Cr, P, Co, W, Mn, Si dans des quantités allant jusqu'à 8 % en poids.

4. Méthode selon la revendication 3, caractérisée en ce que l'additif ou les additifs est/sont présent(s) dans une quantité allant jusqu'à 6 % en poids.

5. Méthode selon l'une quelconque des revendications 1 à 4, caractérisée en ce que le frittage est réalisé à des températures supérieures à 1200°C.

6. Méthode selon l'une quelconque des revendications 1 à 5, caractérisée en ce que pour le durcissement dans la zone d'assemblage, un revêtement supplémentaire est appliqué sur au moins l'un des composants.

7. Méthode selon la revendication 6, caractérisée en ce que le revêtement contient du C, B, Cu ou Ni.

8. Méthode selon la revendication 6 ou la revendication 7, caractérisée en ce que le revêtement est appliqué sur une épaisseur ≤ 2,0 µm.

9. Méthode selon l'une quelconque des revendications 1 à 8, caractérisée en ce que des nervures de butée, des aplatissements ou des surplats sont appliqués sur au moins un élément moulé, au point d'assemblage.

10. Méthode selon l'une quelconque des revendications 1 à 9, caractérisée en ce que le frittage est exécuté sous gaz de protection ou sous vide.

11. Méthode selon l'une quelconque des revendications 1 à 10, caractérisée en ce qu'un élément moulé métallocéramique, tel qu'une roue dentée ou une came, est fixé sur un arbre.
